# EUROPEAN PATENT APPLICATION

(11) **EP 1 396 808 A1**
(43) Date of publication of application: **10.03.2004**
(21) Application number: 03019204.1
(22) Date of filing: 25.08.2003
(51) Int. Cl.: G06F 17/60, B42D 15/00, G07F 17/42

(54) **Method and apparatus of printing payment transaction information, program, printer driver and point of sale system for realising the same**

(30) Priority: 05.09.2002 JP 2002260047
(71) Applicant: SEIKO EPSON CORPORATION, Shinjuku-ku, Tokyo 163-0811 (JP)
(72) Inventor: Minowa, Masahiro, c/o Seiko Epson Corporation, Suwa-shi Nagano-ken 392-8502 (JP); Yokoyama, Kazuyuki, c/o Seiko Epson Corporation, Suwa-shi Nagano-ken 392-8502 (JP)
(74) Representative: Hoffmann, Eckart, Dipl.-Ing.

(57) **Abstract**

Background image data representing a background image are stored in a printer in advance. When print data representing receipt print information are obtained from a personal computer, the background image and the receipt print information are printed on a receipt so as to overlap each other. Here, a start character string and an end character string are detected from the print data, and the background image is printed in a print region equivalent to the region between lines where the start character string and the end character string are printed. A color-graphic-based receipt can thus be issued without changing a monochrome-text-based application program.

## Description

### BACKGROUND OF THE INVENTION

### 1. Field of the Invention

The present invention relates to a method of printing information on a printing mediumtogether with an image.
In particular, it relates to a method of printing on a receipt payment transaction data obtained by using a host computer based on input information concerning merchandise sales, and then by synthesizing the receipt print data with the image data. The present invention also relates to a program for realizing the printing method, a recording medium, a printing apparatus, a printer driver, a merchandise sales data processing apparatus, and a POS (point-of-sale) system.

### 2. Description of the Related Art

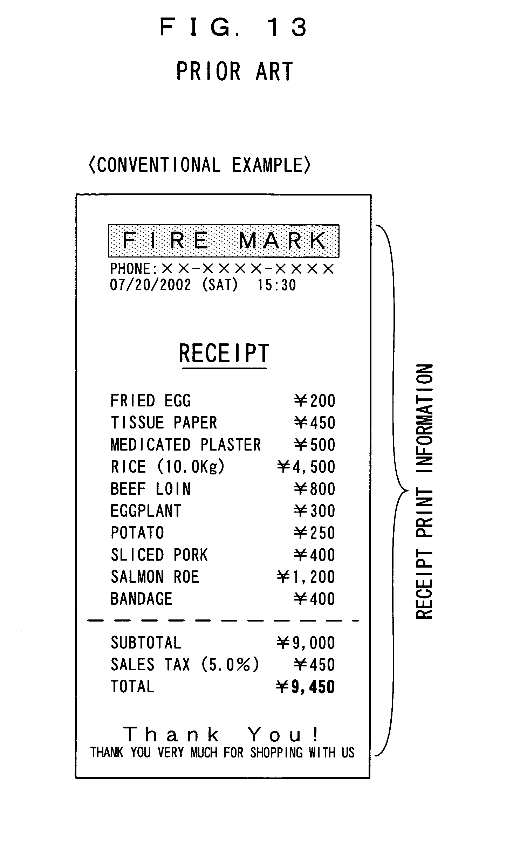

Conventionally, a printer (printing apparatus) for printing receipts has been incorporated in a POS system utilized in the retail business, such as supermarkets or convenience stores. A typical printer widely used in the POS system is a so-called monochrome-text-based printer (see, e.g., Japanese Unexamined Patent Publication No. 2001-273560), which is designed to issue a receipt with a printout of receipt print information as illustrated in Fig. 13. Along with downsizing and speeding up of color printers, application of a color printer to the POS system has been desired recently.

However, in an attempt to introduce a color printer actually into the POS system, the application program for the POS system constitutes obstacles because the application program is usually monochrome-text-based, designed for a monochrome printer. Accordingly, in order to print a colored receipt or insert a picture onto the receipt, the application program needs to be changed to color-graphic-based programs. However, changing of the application program requires a significant capital investment. For this reason, there has been a problem in that effective utilization of a color printer is not expected.

### SUMMARY OF THE INVENTION

In view of the foregoing disadvantages, the present invention has an advantage of providing a method of printing which enables issuance of a color-graphic-based receipt without changing a monochrome-text-based application program, and in providing a program, a recording medium, an apparatus for printing, a printer driver, a merchandise sales data processing apparatus, and a POS system for realizing the printing method.

The printing method according to the present invention is a method of printing data of payment information on a printing medium together with an image, comprising: a first step of storing image data representing an image to be printed on the printing medium; a second step of obtaining data to be printed based on input payment transaction information; a third step of detecting a character string indicating a position to start or end the addition of the image data to the data of payment transaction information obtained in the second step; and a fourth step of printing, on the printing medium, the image and the data of payment transaction information, the image being printed in a region of which at least the one end is defined by the character string by synthesizing the image data with the data of payment transaction information.

In another aspect of the present invention, there is provided a method of printing payment transaction print data on a receipt by using a printing apparatus. The receipt print data is prepared by obtaining payment transaction print data mainly constituted of payment transaction data to be printed and is generated by an application execution unit on a host computer based on input information concerning merchandise sales, and then by superposing background image data on the payment transaction print data. The method comprises: a background image data storing step for storing the background image data representing the background image; a print data obtaining step for obtaining the payment transaction print data from the application execution unit; a character string detecting step for detecting a start character string indicating a position to start the addition of the background image data and an end character string indicating a position to end the addition of the background image data out of the payment transaction print data; and a printing step for printing the background image on the receipt within a region defined by the start character string and the end character string so that the background image is superposed on the payment transaction print data.

The printing apparatus according to the present invention is an apparatus for printing data for printing on a printing medium together with a background image, comprising: first means for storing background image data representing a background image to be printed on the printing medium; second means for obtaining data to be printed based on input payment transaction information; third means for detecting a start character string indicating a position to start the addition of the background image data and an end character string indicating a position to end the addition of the background image data out of the data of payment transaction obtained in the second means; and fourth means for printing, on the printing medium, the background image and the data of payment transaction, the background image being printed within a region defined by the start character string and the end character string in a manner to superpose the background image on the image of the payment transaction print data.

According to another aspect of the present invention, there is provided an apparatus for printing, on a receipt, printing data prepared by obtaining payment transaction print data generated by a host computer based on input information concerning merchandise sales, the payment transaction print data being printed so that background image is superposed on the payment transaction print data. The printing apparatus comprises: background image data storing means for storing the background image data representing a background image; character string storing means for storing a start character string indicating a position to start the addition of the background image data and an end character string indicating a position to end the addition of the background image data; print data obtaining means for obtaining the payment transaction print data from the host computer; character string detecting means for detecting a start character string indicating a position to start the addition of the background image data and an end character string indicating a position to end the addition of the background image data out of the payment transaction print data; and printing means for printing the background image on the receipt in a region from a line designated by the start character string to a line designated by the end character string so that the background image is superposed on the image of the payment transaction print data.

According to the arrangements described above, when the background image data representing the background image is stored (in the printer) and the payment transaction print data representing the receipt information of payment transaction generated by the host computer is obtained, it is possible to issue a color-graphic-based receipt (with the printer) without changing an application program even if the host computer uses a monochrome-text-based application program, for example. This is because the payment transaction information is printed on a receipt together with the background image. Moreover, the line for printing the start character string and the line for printing the end character string are severally detected from the print data, and a region between the lines is defined as a region for printing the background image. In this way, it is possible to specify the print region easily and thereby to produce a good-looking receipt. In particular, if the start character string and the end character string are defined by use of character strings which are always printed on the receipts (such as "Receipt" and "Total Amount"), it is possible to issue a receipt on which the background image is printed in an appropriate region corresponding to the length of the receipt.

Preferably, the method further comprises a fifth step of designating at least any of the start character string and the end character string.

The printing apparatus preferably further comprises fifth means for designating at least any of the start character string and the end character string.

According to the above arrangements, it is possible to designate the print region for the background image to meet a preference of a user by designating the start character string and/or the end character string.

In the printing method, preferably, the fourth step enables color printing by use of a primary color and at least one secondary color other than the primary color, and the data for printing is printed in the primary color and the background image is printed in at least said one secondary color.

In the printing apparatus, preferably, the fourth means enables color printing by use of a primary color and at least one secondary color other than the primary color, and the payment transaction data is printed in the primary color and the background image is printed in at least said one secondary color.

According to the above arrangements, the receipt is formed in at least two colors. In this way, it is possible to add the background image without making it difficult to read the receipt print information. Moreover, since the color printing becomes available, it is possible to enhance visibility of the receipt.

In the printing method, preferably, a character string is designated in the fifth step in accordance with a setting command transmitted from the host computer.

In the printing apparatus, preferably, the fifth means stores a given character string into the character string storing means in accordance with a setting command transmitted from the host computer.

According to the above arrangements, it is possible to designate the character string in accordance with the setting command transmitted from the host computer. Therefore, the user can designate the character string without directly operating the printer.

Preferably, in the printing method, the setting command includes a parameter for designating a print color for the background image.

According to the above arrangement, the user can designate the print color of the background image without directly operating the printer.

In the printing method, preferably, a plurality of background images are stored in the first step each of images being in a form of file, and the setting command includes a parameter for selecting a file of the background image data as an object for printing from the plurality of the background image files.

In the printing method, preferably, the setting command is generated by a printer driver which is incorporated in the host computer.

According to the above arrangement, since the setting command is generated by the printer driver, it is possible to perform setting of the background image data from the host computer without changing the application program in the host computer.

The program according to the present invention is characterized in that the program causes a computer to realize the above-described printing method.

According to the above arrangement, it is possible to provide the program which can issue a color-graphic-based receipt without changing an application program even if the host computer uses a monochrome-text-based application program, for example.

The recording medium according to the present invention is characterized in that the above-described program is recorded therein.

According to the above arrangement, it is possible to provide the recording medium in which the program is recorded, the program capable of issuing a color-graphic-based receipt without changing an application program even if the host computer uses a monochrome-text-based application program, for example.

The printer driver according to the present invention is incorporated in a host computer. The printer driver generates background image-added print data by adding background image data representing a background image to payment transaction print data generated by an application execution unit in the host computer based on input information concerning merchandise sales, and by transmitting the background image-added print data to an apparatus for printing. The printer driver comprises: background image data storing means for storing files of the background image data which represent the background image; print data obtaining means for obtaining the payment transaction print data from the application execution unit; character string detecting means for detecting a start character string indicating a position to start addition of the background image data and an end character string indicating a position to end addition of the background image data out of the payment transaction print data; background image-added print data generating means for generating the background image-added print data by adding the background image data to the payment transaction print data within a region defined by the start character string and the end character string; and transmitting means for transmitting the background image-added print data to the printer.

According to the above arrangement, the printer driver being incorporated in the host computer generates the background image-added print data by adding the background image data representing the background image to the print data generated by the application execution unit in the host computer based on the input information concerning merchandise sales, and the printer driver transmits the background image-added print data to the printer. Accordingly, it is possible to issue a color-graphic-based receipt by use of the printer without changing an application program even if the host computer uses a monochrome-text-based application program, for example. Moreover, the background image is printed within the region between the line designated by the start character string and the line designated by the end character string detected from the print data. In this way, it is possible to specify the print region easily and thereby to produce a good-looking receipt. In particular, if the start character string and the end character string are defined by use of character strings which are always printed on the receipts (such as "Receipt" and "Total Amount", for example), it is possible to issue a receipt on which the background image is printed in an appropriate region in accordance with the length of the receipt.

The merchandise sales data processing apparatus according to the present invention is characterized in that the above-described printer and a host computer are included therein.

According to the above arrangement, it is possible to provide the merchandise sales data processing apparatus which is capable of issuing a color-graphic-based receipt without changing an application program or a printer driver in the host computer even if the host computer uses a monochrome-text-based application program, for example.

The merchandise sales data processing apparatus according to the present invention is further characterized in that the above-described printer driver, a host computer and an apparatus for printing are included therein.

According to the above arrangement, it is possible to provide the merchandise sales data processing apparatus which is capable of issuing a color-graphic-based receipt without changing an application program in the host computer even if the host computer uses a monochrome-text-based application program, for example.

The POS system according to the present invention is characterized in that the above-described POS terminal as the above-described merchandise sales data processing apparatus and a POS server for managing the POS terminal are included therein. The POS server is connected with the POS terminal via a network.

According to the above arrangement, it is possible to provide the POS system which is capable of issuing a color-graphic-based receipt without changing an application program in the host computer even if the host computer uses a monochrome-text-based application program, for example.

### BRIEF DESCRIPTION OF THE DRAWINGS

The above and other objects and the attendant features of the present invention will become readily apparent by reference to the following detailed description when considered in conjunction with the accompanying drawings wherein;
Fig. 1 is a block diagram showing one example of a POS system according to the present invention;
Figs. 2A and 2B are external perspective views showing a POS terminal included in the POS system according to the present invention;
Fig. 3 is a functional block diagram of a printer according to the present invention;
Fig. 4 is a control block diagram of the printer according to the present invention;
Fig. 5 is a flowchart showing one example of background image-added print data generation processing according to the present invention;
Fig. 6 is a view showing one example of a setup screen for setting background image data according to the present invention;
Fig. 7 is another view showing the example of the setup screen for setting the background image data according to the present invention;
Fig. 8 is a view showing examples of background images;
Fig. 9 is a view showing "Print Example 1", which is one example of a receipt to be generated by a printing method according to the present invention;
Fig. 10 is a view showing "Print Example 2", which is another example of a receipt to be generated by the printing method according to the present invention;
Fig. 11 is a view showing "Print Example 3", which is still another example of a receipt to be generated by the printing method according to the present invention;
Fig. 12 is a functional block diagram of a terminal device according to a second embodiment of the present invention; and
Fig. 13 is a view showing an example of generating a receipt according to a conventional example.

### DETAILED DESCRIPTION OF PREFERRED EMBODIMENTS

Now, a description will be made about a printing method (method of printing) according to an embodiment of the present invention, a program for realizing the method, a recording medium, a printer (an apparatus for printing), a printer driver, a merchandise sales data processing apparatus, and a POS system for realizing the printing method will be described in detail with reference to the accompanying drawings. The present invention is designed to store image data representing an image in a printer in advance. Moreover, upon obtaining print data representing receipt information of payment transaction (see Fig. 13) generated by a host computer, the present invention is designed to print the image and the text-based receipt information on a receipt paper (generically referred to as printing medium) so as to synthesize the image to the text-based receipt information. According to this arrangement, it is possible to issue a color-graphic-based receipt without changing an application program even if the host computer uses a monochrome-text-based application program, for example. Moreover, a start character string and an end character string are detected out of the print data and a region designated with the respective character strings is defined as a region for printing the background image. In this way, the present invention exerts various operations and effects such as capability of specifying the print region easily, or capability of producing a good-looking receipt as a consequence.

Now, the present invention will be described below by taking a POS system for example. Here, the POS system is used in a shop such as a supermarket or a convenience store, and is configured to issue a receipt (generically referred to as a printing medium) based on input information concerning merchandise sales which is inputted by an operator.

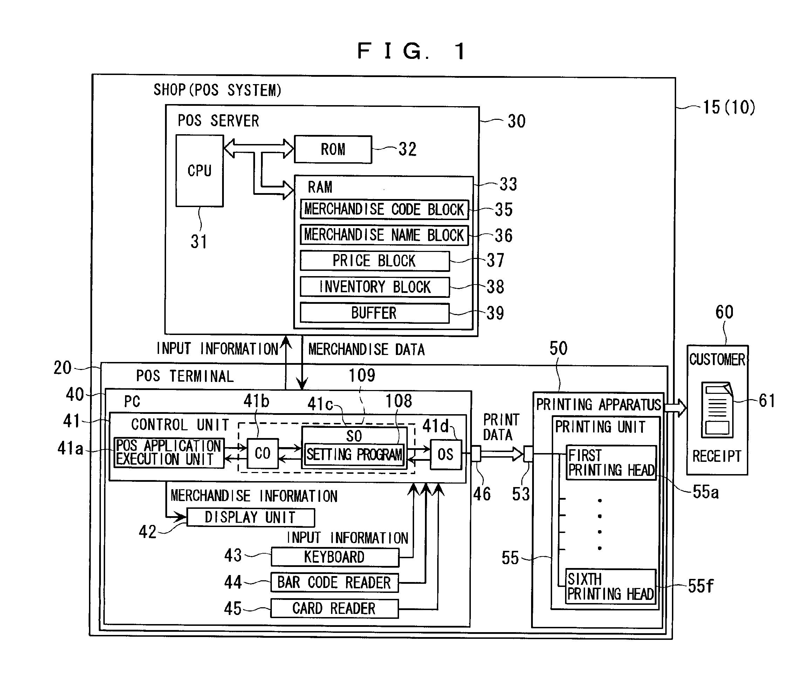

As shown in Fig. 1, a POS system 10 of the present invention includes a plurality of POS terminals 20 (note that only one POS terminal is illustrated in Fig. 1) which are merchandise sales data processing apparatuss to obtain the input information mainly by reading bar codes attached to the merchandise, and a POS server 30 for managing the input information inputted to the POS terminals 20 connected with the POS server 30 via a network.

The POS server 30 includes a control device (a central processing unit (CPU) 31, and memories such as a read-only memory (ROM) 32 and a random access memory (RAM) 33. The POS server 30 processes information stored in a buffer 39 or the like in the RAM 33 in accordance with a control program stored in the ROM 32. In particular, the RAM 33 contains a merchandise master which includes a merchandise code block 35, a merchandise name block 36, a price block 37, an inventory block 38 and the like. The CPU 31 extracts information concerning a merchandise code, a merchandise name and a price out of the merchandise master based on input information transmitted from the POS terminal 20, and thereby generates merchandise data to be printed on a receipt 61 and to be displayed on a display unit 42 of the POS terminal 20. Here, the "merchandise data" refer to original data for print data to be generated by a personal computer (PC; terminal apparatus) 40. The merchandise data contains merchandise information to be printed on the receipt 61, such as the merchandise name or the price thereof.

The POS terminal 20 includes the personal computer 40, which has a POS application execution unit 41a for generating the print data for printing the receipt print information (which contains information on a store name and a telephone number thereof, date of purchase, a message for a customer and the like in addition to the merchandise information; see Fig. 13) on the receipt 61 by referring to the merchandise data stored in the POS server 30 based on the input information, and for performing payment transaction registration processing such as registration of the inputted data on the POS server 30. The POS terminal 20 also includes a printer 50 (a receipt printer; also referred to as an apparatus for printing) for printing the receipt 61 based on the print data. The PC 40 and the printer 50 are connected with each other by connectors 46 and 53. The PC 40 obtains the input information such as information concerning the merchandise (the merchandise information) and information concerning a customer 60 (customer information) from input with a keyboard 43 or bar code reading with a bar code reader 44. A card reader 45 reads a credit card or a membership card of the customer 60, whereby the PC 40 obtains information on credit card clearance and information on the member such as a membership number. Moreover, the PC 40 further includes the display unit 42 for displaying the merchandise information generated based on the merchandise data transmitted from the POS server 30. The display unit 42 exhibits the price of the purchased merchandise, and the like to the customer 60.

The PC 40 is controlled by a printer driver "OLE for Retail POS" (hereinafter referred to as the OPOS) which operates on an operating system (OS) such as Microsoft Windows (trademark). The OPOS provides a POS application execution unit 41a that operates on the OS with an interface, which does not depend on models of peripheral devices such as the printer 50 and the bar code reader 44. The OPOS includes a control object (CO) 41b which corresponds to respective device categories, and a service object (SO) 41c which corresponds to respective device models.

The POS application execution unit 41a generates the print data to be printed on the receipt 61 based on the merchandise data transmitted from the POS server 30 and on the input information. In this event, the print data are delivered to the CO 41b for the printer and further delivered from the CO 41b to the SO 41c corresponding to the model of the printer. The SO 41c processes the print data and thereby generates a print command corresponding to command specifications of the relevant printer, and then transmits the print command to the printer 50 via an OS 41d. Here, the above-described OPOS is provided to the user as a printer driver 109 in the combined form of the SO 41c and the CO 41b.

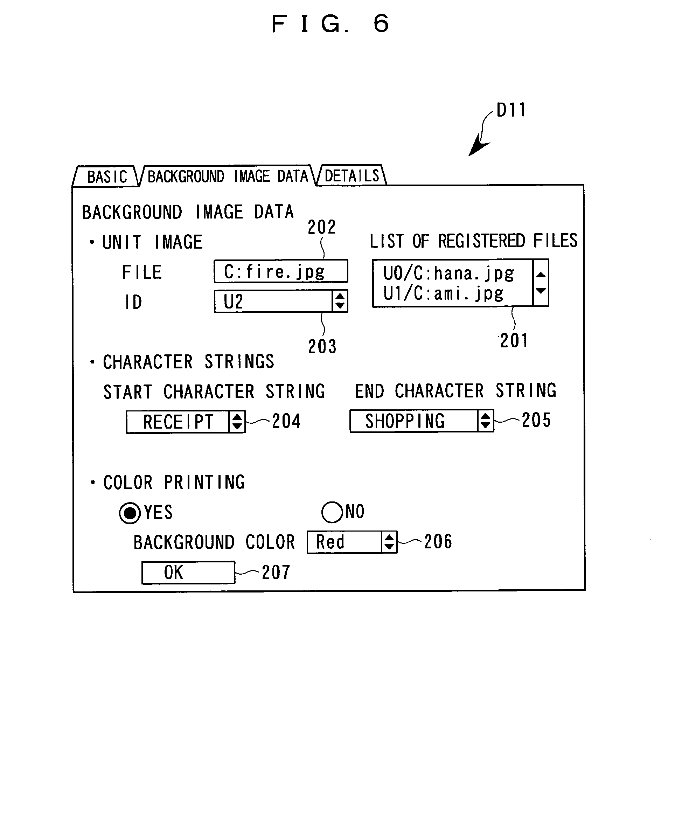

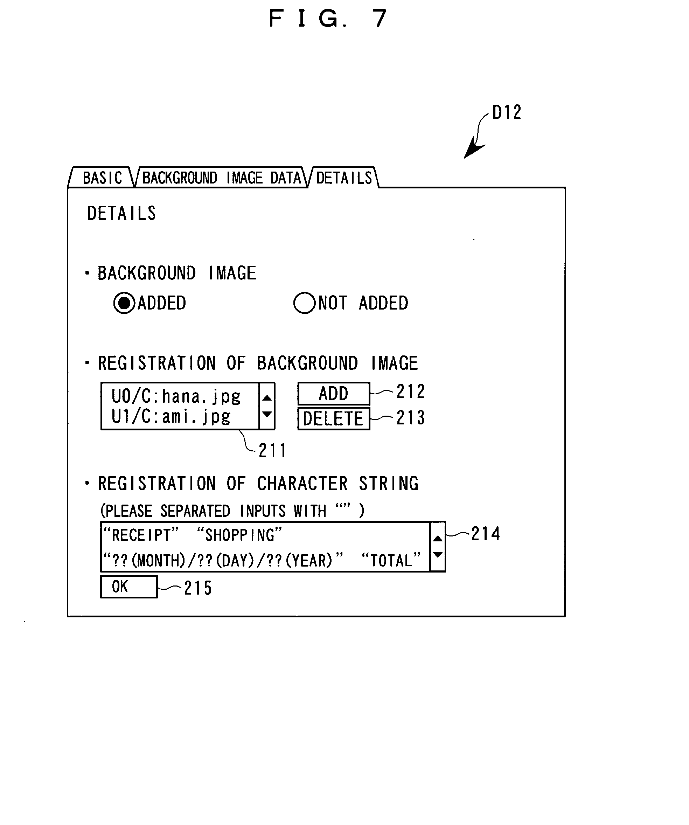

Moreover, a background image data setting program 108 for setting the background image data is installed in the SO 41c. The background image data setting program 108 is designed to provide the user with an interface for setting the background image data by means of displaying certain setting screens (see Fig. 6 and Fig. 7) on the display unit 42. The detail description for the background image data setting program 108 will be made later. Since the background image data setting program 108 is provided by the printer driver 109 as described above, it is possible to perform setting of the background image data from the PC 40 without changing the POS application execution unit 41a of the PC 40.

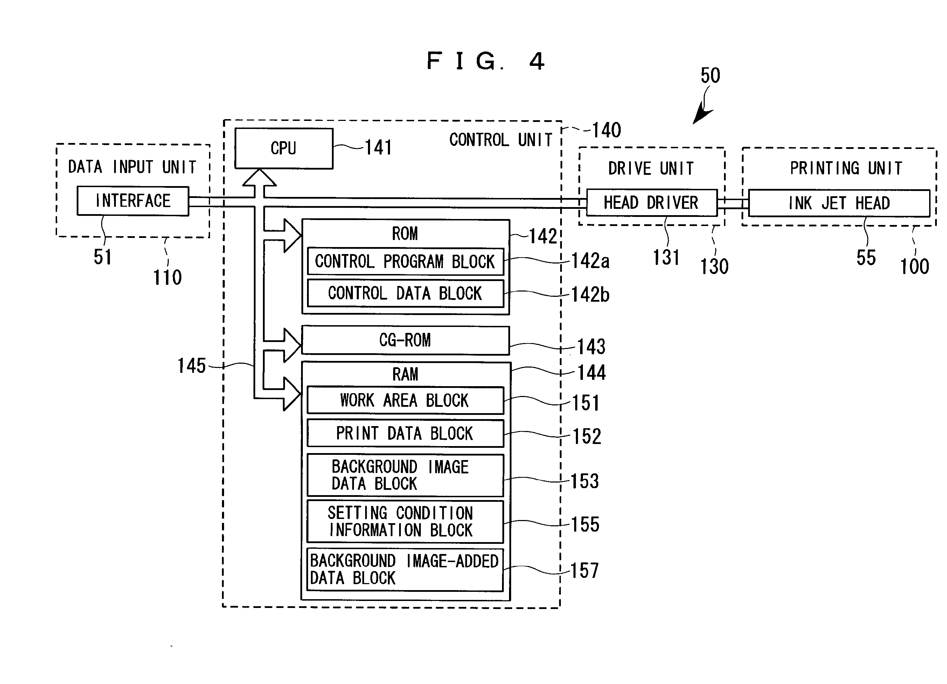

The printer 50 is an inkjet printer which adopts an inkjet method for printing. The printer 50 includes a printing unit 120 (Fig. 4) having six inkjet heads of first to sixth printing heads 55a to 55f. These inkjet heads 55 are arranged to eject magenta (M) ink, cyan (C) ink, yellow (Y) ink, light magenta (LM) ink, light cyan (LC) ink, and black (K) ink, respectively, so as to perform printing in full colors. Note that the arrangement of the printing heads 55 is not limited to the above. It is possible to increase the number of heads so as to perform printing in more colors; alternatively, it is also possible to decrease the number of heads so as to perform printing in one or two colors only.

It is possible to set the printer 50 either to a monochrome print mode for printing only with the sixth printing head 55f or to a color print mode for printing with all the printing heads by use of a DIP switch (not illustrated) or a soft DIP switch. Accordingly, the PC 40 obtains information on the mode setting and decides whether color information should be contained in the print data to be generated. Therefore, when the printer 50 is set to the color print mode and the print data contain color information, it is possible to perform two-color or multi-color printing on the receipt 61 based on the above-mentioned conditions. In the following description, it shall be assumed that the printer 50 is set to the color print mode and that the receipt print information is printed in black (K) of the primary color while the background image is printed in designated secondary color(s) other than the primary color.

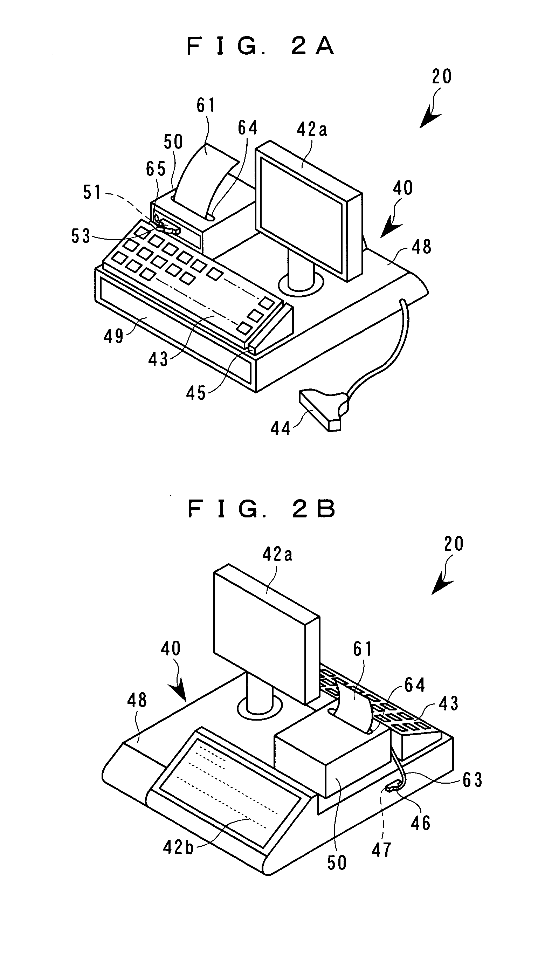

Next, description will be made about a device constitution of the POS terminal 20 with reference to Figs. 2A and 2B. Fig. 2A is a front perspective view of the POS terminal 20 from the viewpoint of an operator, and Fig. 2B is a rear perspective view of the POS terminal 20 from the viewpoint of a customer. As shown in the drawings, the POS terminal 20 includes the PC 40 of which a main unit is formed of a box-shaped main body case 48 and the printer 50 which is disposed on the rear left side of the main body case 48. Here, the printer 50 is connected with the main body case 48 through a cable. Accordingly, the location of the printer 50 is not limited to the above, and the printer can be disposed in an arbitrary position within the range allowed by the cable length.

The PC 40 includes a keyboard 43 for allowing the operator to input information such as the merchandise information or the customer information. The keyboard 43 is located on the front upper face of the main body case 48. Moreover, an operator-side display unit 42a is located on the rear right side of the keyboard 43 so as to allow the operator to confirm the input information. In addition, a cash drawer 49 is housed in the main body case 48. The bar code reader 44 for reading a bar code, which is either attached to or printed on the merchandise, is provided on the right side face of the main body case 48, and a printer-side interface 47 to be connected with the printer 50 is provided on the left side face thereof. Moreover, a card reader slot 45 is formed on the right side of the keyboard 43 for reading a credit card presented by the customer 60. Furthermore, a customer-side display unit 42b is located on the rear side of the main body case 48 so as to allow the customer 60 to confirm the merchandise information and the like. Here, the setting screens (see Figs. 6 and 7) for setting the background image data are displayed on the above-described operator-side display unit 42a. Accordingly, the operator performs the setting operation while confirming the setting screens.

An operation indicator lamp 65 and an interface 51 are located on the front side of the printer 50. The interface 51 and the interface 47 provided on the PC 40 are connected to each other through a cable 63 and the connectors 46 and 53. A receipt outlet 64 for discharging the printed receipt 61 is formed on an upper face of the printer 50.

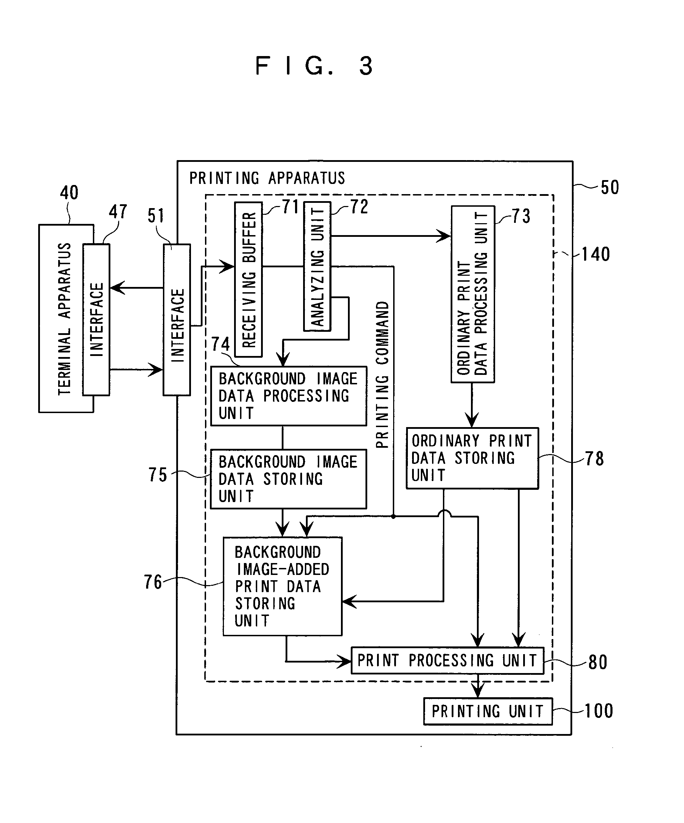

Description will now be made about a control arrangement of the printer 50 with reference to a functional block diagram in Fig. 3. As shown in the drawing, a control unit 140 of the printer 50 obtains, from the terminal apparatus 40 through the interface 51, various data such as ordinary printing data to be used in printing a receipt for ordinary account settlement (payment transaction), printing command, background image setting command and the like, and stores them in a receiving buffer 71. A command analyzing unit 72 analyzes the data stored in the receiving buffer 71 and performs the data processing according to the command data contained therein. If the command is an ordinary print command (inclusive of print data) which does not include the background image, the command analyzing unit 72 transmits the command to an ordinary print data processing unit 73. If the command is a background image setting command, the command analyzer 72 transmits the command to a background image data processing unit 74. If the command is a background image-added print data, the command analyzer 72 transmits the command to a background image-added print data generating unit 76. The background image data processing unit 74 generates a given background image as described hereinafter to thereby store it in a background image data storing unit 75. The ordinary print data processing unit 73 generates print data to thereby store it in an ordinary print data storing unit 78.

Since the print command includes a parameter for adding a background image, the background image-added print data generating unit 76 synthesizes the data stored in the ordinary print data storing unit 78 and a predetermined background image as selected from the data stored in the background image data storing unit 75 according to the content as designated by this parameter (the contents of the parameter to add the background image will be described in detail hereinafter), to thereby transmit the data to a print processing unit 80. If the parameter to add the background image is not contained in the print command, the print processing unit 80 transmits the data in the ordinary print data storing unit 78 as it is to a printing unit 100 to thereby perform printing in the printing unit 100. In this manner, the print processing unit 80 selectively obtains the data depending on the kind of the print command to thereby transmit it to the printing unit 100. These operations are mainly constituted by CPU, ROM, RAM, or the like (details to be described hereinafter). As described above, when the background image-added printing is commanded from the terminal apparatus 40, a background image-added data is generated so as to print it y the printing unit 100.

Fig. 4 shows a control block diagram of the printer 50. As shown in the drawing, the printer 50 includes: a data input unit 110 for inputting the background image setting command from the PC 40 and the print data, the data input unit 110 having the interface 51; the printing unit 100 having the six inkjet heads 55 arranged to eject various colors of ink severally and thereby to perform color printing; a drive unit 130 for driving the inkjet heads 55, the drive unit 130 having a head driver 131; and a control unit 140 for controlling the entire printer 50.

The control unit 140 includes a CPU 141, a ROM 142, a CG-ROM 143 and a RAM 144, which are mutually connected by use of an internal bus 145. The ROM 142 includes a control program block 142a for storing a control program to be processed by the CPU 141 and a control data block 142b for storing control data containing various tables. The CG-ROM 143 stores font data of characters to be printed and outputs relevant font data when a code for specifying the character is given thereto.

The RAM 144 includes: various work area blocks 151 to be used as flags and the like; a print data block 152 for storing the print data transmitted from the PC 40; a background image data block 153 for storing a plurality of background image data files; a setting condition information block 155 for storing the information (setting conditions) concerning the start character string, end character string, the file names of the background images, the print colors, a condition for adding the background image and the like; and a background image-added print data block 157 for storing the background image-added print data generated by adding the background image data to the print data. The RAM 144 is used as a work area for the control processing. Moreover, the RAM 144 is always backed up so that the RAM 144 retains the stored data even if electric power is cut off. The internal bus 145 is also connected with the data input unit 110 and with the drive unit 130 as well. Accordingly, the input data (such as the background image setting command or the print data) are retrieved from the interface 51, and forward output data (such as the background image-added print data) outputted from the CPU 141 and the like and a control signal to the drive unit 130 (the head driver 131).

Moreover, with the above-described arrangement, the CPU 141 performs setting of the background image data by inputting various Signals, data and the like from the respective units in the printer 50 based on the control program stored in the ROM 142 while processing the various data in the RAM 144, and by outputting the various signals, data and the like to the respective units. The CPU 141 further generates the background image-added print data by adding the background image data to the print data in accordance with the contents of setting, and then performs printing based on the background image-added print data.
In this way, the CPU 141 controls the entire printer 50.

Here, the interface 51 and the interface 47 provided on the PC 40 may adopt various ports, including those which support serial data transmission such as the RS-232C standard, those which support parallel data transmission such as the Centronics standard, those which support network connection such as 10Base-T Ethernet (trademark) or those which support a data transmission standard such as USB.

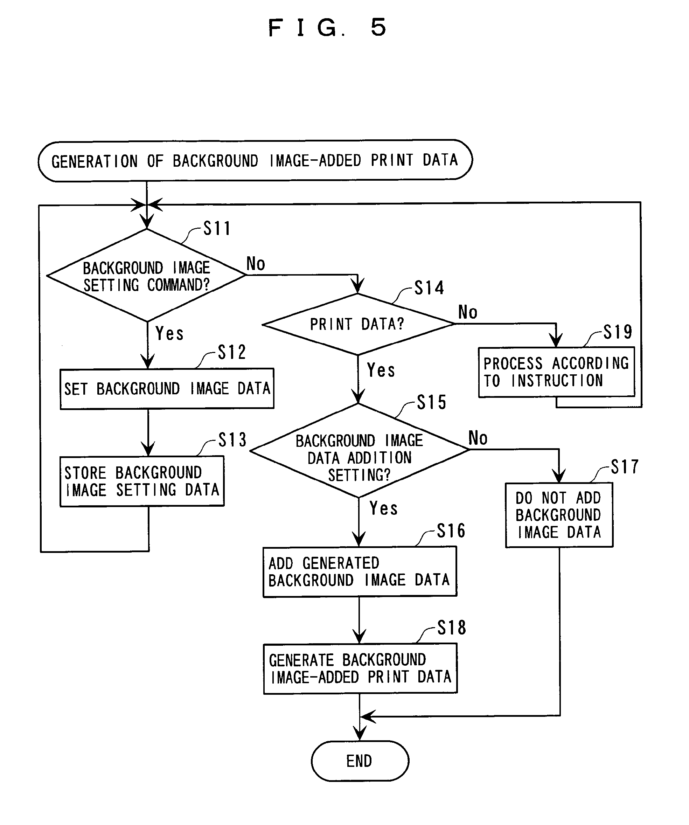

Next, description will be made about processing for generating the background image-added print data by the printer 50 with reference to a flowchart of Fig. 5. First, when the input data are obtained, the printer 50 judges whether the input data represent the background image setting command (S11). When the input data represent the background image setting command (S11: Yes), the printer 50 performs setting of the background image data (S12).
In this event, the background image setting command includes a command code and various parameters, which are collectively referred to as an ESC sequence. For example, a description "ESC *" is used for bit image data transmission. This command is extended to a description such as "ESC * m nL nH dl ... dk" so as to render the image data transferable. A command exclusive for background image transmission is set up based on the above constitution. Accordingly, various data such as the file names, the sizes, and the colors can be transmitted as parameters simultaneously with image data. This embodiment assumes to apply the command having the above-described constitution. In this way, the printer which receives the command can manage the data depending on the file names.

The background image data setting is performed by execution of the background image data setting program 108 (see Fig. 1) in the PC 40. To be more precise, when the background image data setting program 108 is started, the setting screens as shown in Fig. 6 and Fig. 7 are displayed on the operator-side display unit 42a so that the operator sets the background image data by inputting various information. Such operations will be described later in detail.

When the background image data setting is completed (S12), the information concerning the contents of setting is stored in the background image setting data block 156 (see Fig. 4) (S13). Then, processing of adding the background image data after setting to the transmitted print data takes place. In other words, if the input data do not represent the background image setting command (S11: No) but represents the print data (S14: Yes), the printer 50 judges whether the additional setting of the background image data is attached (S15). When the additional setting is attached (S15: Yes), the predetermined background image data are added to the relevant print data (S16), and thereby generates the background image-added print data (S18). When the additional setting is not attached (S15: No), no background image data are added (S17) and the print data transmitted from the PC 40 are defined as ultimate print data. In this event, a print data transfer command is applied. In general, a command for transferring text data is mainly used herein. By defining the necessity to add the background image "Yes" and "No", and a parameter for setting the file name in the case of adding the background image, it is possible to execute a printing process easily while superposing the previously transferred background image data onto the payment transaction print data.

If the input data do not represent the background image setting command (S11: No) or the print data (S14: No; such as a case of inputting information for registration of the background image data), then appropriate processing according to such an instruction takes place (S19).

Next, description will be made about processing for setting the background image data to be executed by the background image data setting program 108 with reference to the setting screens (D11 and D12) shown in Fig. 6 and Fig. 7. When the operator starts the background image data setting program 108, a command for reading the setting information on the background image data is transmitted to the printer 50. In response to this command, the setting information on the background image data is displayed on the setting screen. The operator performs new setting of the background image data by means of setting portions of the information which are different from the original setting information.

As shown in Fig. 6, the setting screens are divided into a plurality of screen so that a variety of information for setting the background images can be set up in the different screens. Here, the operator (the user) performs setting by opening a desired setting screen. When a setting screen indicated with a first tab "basic" is opened, the operator can set up the width and size of the receipt 61, the brightness and quality of printing regarding the background image and the like. Since the arrangement of the "basic" setting screen is substantially same as normal print setting utilities, detailed description thereof will be omitted herein.

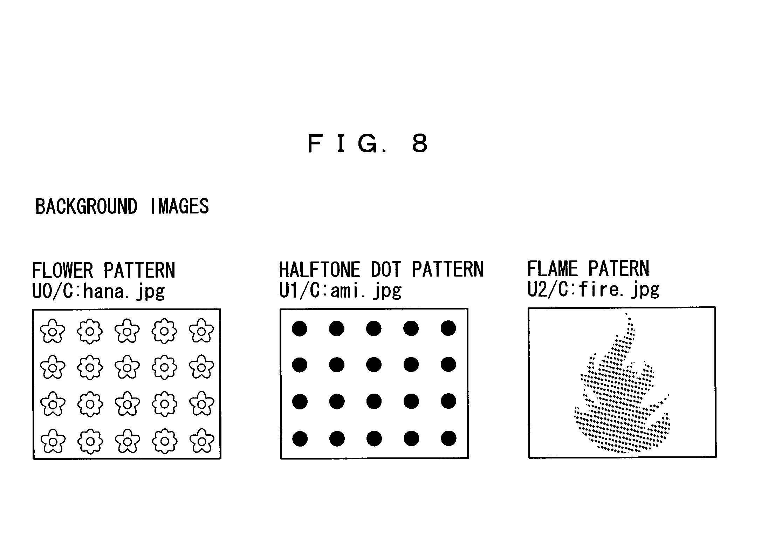

The screen shown in Fig. 6 is the screen (D11) for setting the information on the "background image data". First, the operator selects a file out of a list of registered files 201 to designate the file to be used as the background image, and the selected file is inputted to a file designation field 202. Alternatively, the operator can designate the file by selecting one of registered IDs listed in an ID field 203. Here, it is assumed that three types of image files as shown in Fig. 8 are registered in advance so that the operator can select a background image from these image files. In addition, another assumption is made herein that a "flame pattern (ID: U2)" is selected in this setting operation.

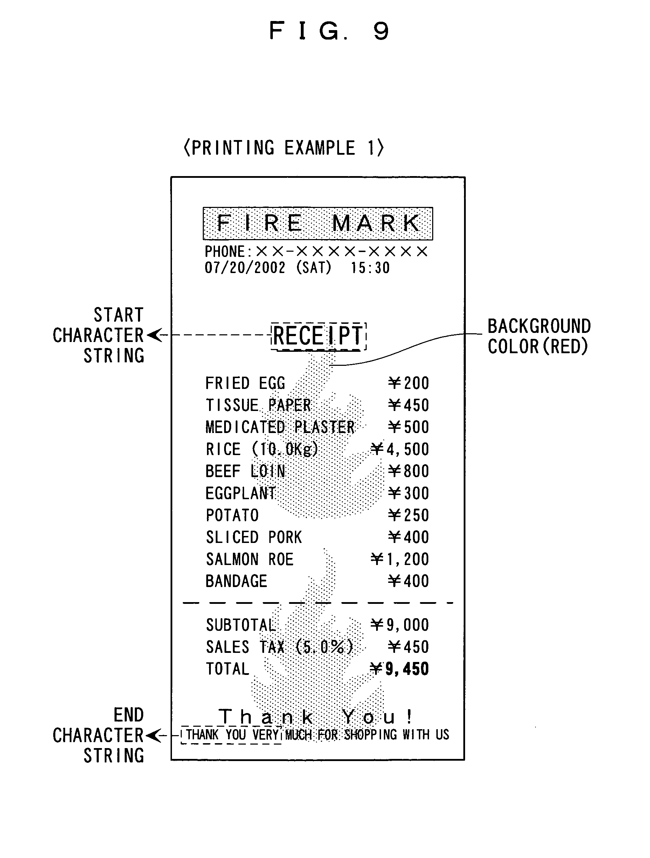

Next, the start character string and the end character string for specifying the region for printing the background image can be set in character string designation fields 204 and 205. For example, when the start character string is a description "receipt", the background image is printed downward from the line including the character string "receipt". Likewise, when the end character string is a description "shopping", for example, then the background image is printed upward from the line including the character string "shopping". That is, as shown in "Print Example 1" of Fig. 9, the region determined by the line including the start character string and the line including the end character string constitutes the print region for the background image.
The start character string and the end character string are used for designation of the starting line and the ending line of superposition of the background image, and the above-described example explains the case where those character strings are included therein. However, the use of the character strings is not limited to the foregoing example. For example, the start character string may be used to designate the line including the character string while the end character string may be used to designate the line immediately before the character string, and vice versa. It is also possible to include the contents for designating such definitions into the command parameter.

It is also possible to set information concerning "color printing" in the setting screen D11. The operator firstly sets whether the color printing is to be performed. When the operator checks a "yes" field, the print color used for printing the background image is set in a background color setting field 211.

Note that the primary color for printing the print data, which represents the receipt print information, is preset to "K (black)" herein. Accordingly, the print color (the secondary color) for the background image is selected from print colors other than "K (black)". Therefore, in the case of a printer designed to perform two-color printing only with "K (black)" and "R (red)", for example, the background image data will be inevitably printed in the secondary color "R (red)" as long as the print data are printed in the primary color "K (black)".
In this way, when the print data are printed in the primary color and the background image data are printed in the secondary color, it is possible to add the background image without affecting easy-reading of the characters and the like which are printed in accordance with the print data. In this setting operation, an assumption is made that "R (red)" is selected for the background color.

After completion of contents setting described above, the operator clicks an "OK" button 207, whereby the information set up concerning the "background image data" is stored in a memory such as the RAM inside the PC 40.

Fig. 7 is the screen (D12) for setting information on "details". Firstly, the operator sets up whether the background image should be added or not. Here, if the operator checks a "no" field, addition of the background image data is not carried out irrespective of the above-described setting contents, and only the receipt print information is printed on the receipt 61 instead (see Fig. 13). Additional registration or deletion of the background image data in and out of a background image registration field 211 by clicking an "add" button 212 or a "delete" button 213. Moreover, a character string which the operator intends to register either as a start character string or an end character string is inputted to a character string registration field 214. Accordingly, the start character string and the end character string are selected severally by use of the character string designation fields 204 and 205 (see Fig. 6), which include the lists of the character strings inputted herein. When the above-described setting of the contents is completed, the operator clicks an "OK" button 215, whereby the information thus set up concerning the "details" is stored in the memory such as the RAM inside the PC 40.

Thereafter, when setting of all the information shown in Fig. 6 and Fig. 7 is completed and when the operator clicks an unillustrated "complete setting button" for the background image data, the information thus set up (the information stored in the memory such as the RAM inside the PC 40) is transmitted from the PC 40 to the printer 50 as the "background image setting command". The printer 50 performs setting of the background image data in accordance with this "background image setting command" as described above. The printer 50 stores the setting contents in the background image setting data block 156 (see Fig. 4), and generates the background image-added print data by adding the background image data thus set up to the print data transmitted from the PC 40. Moreover, the information concerning the background images and the character strings registered on the setting screen (D12) for the "details" is transmitted to the printer 50 together with the "background image setting command" when the "complete setting button" is clicked. Accordingly, the information is stored into the background image data block 153 and the character string block 154 (see Fig. 4) as appropriate.

The "Print Example 1" of Fig. 9 shows a result of the printing of the background image thus set so as to overlap the receipt print information in accordance with the above-described setting operation. That is, according to the above-described setting contents, the background image of the "flame pattern" is printed from the line including the start character string "receipt" to the line including the end character string "shopping", and the print color of the background image is set to "red". In addition, as shown in the drawing, the background image of the "flame pattern" is repeatedly printed in response to the length between the line including the start character string and the line including the end character string.

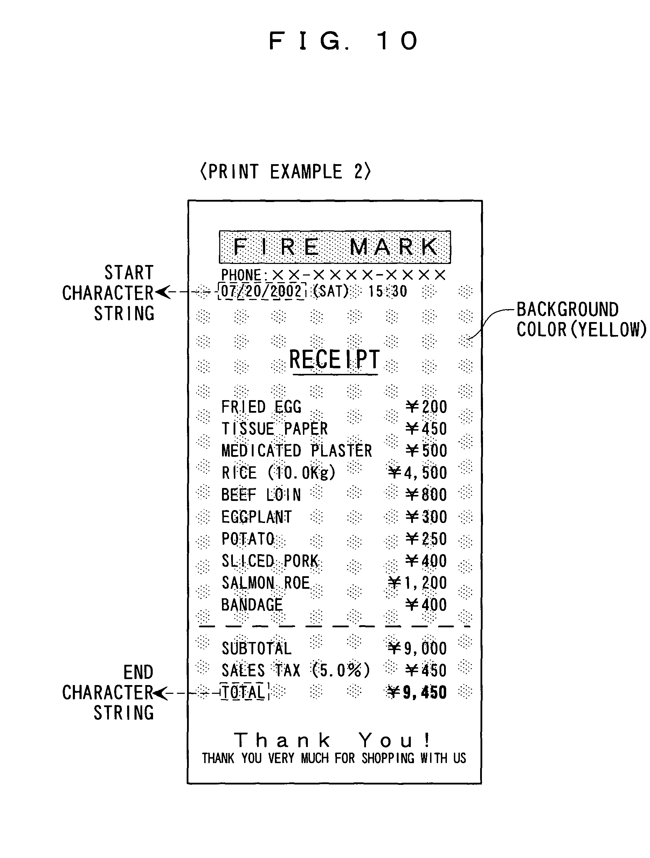

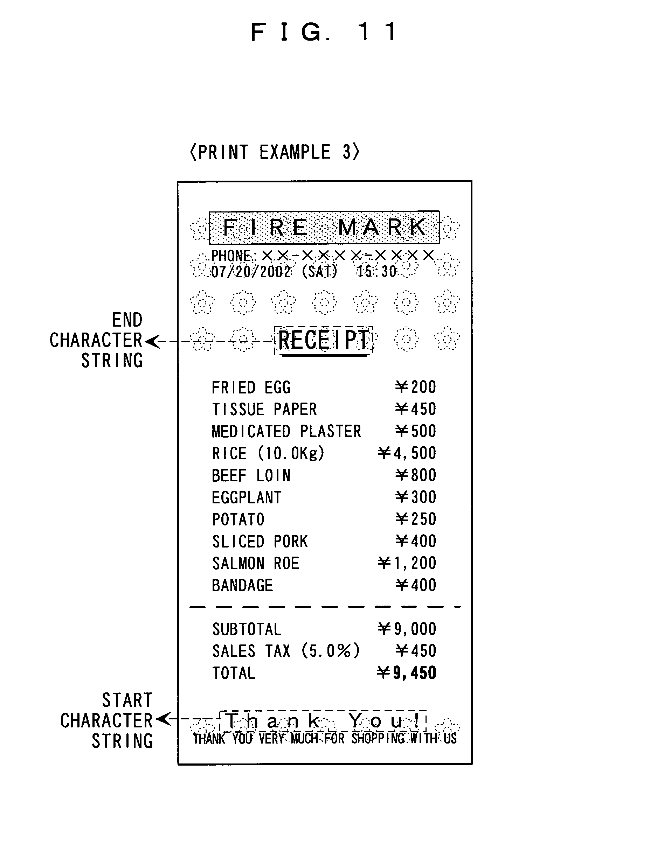

Now, description will be made about other print examples of the background images. In "Print Example 2" of Fig. 10, a "halftone dot pattern" is selected as the background image and the background color is set to "yellow". Here, the start character string is set to "??(Month)/??(Day)/??(Year)" (applying wildcard characters) and the end character string is set to "total". In "Print Example 3" of Fig. 11, a "flower pattern" is selected as the background image and the background color is set to "yellow". Here, the start character string is set to "Thank You" and the end character string is set to "receipt". Accordingly, the background image of the "flower pattern" is printed in a region from the line including the start character string "Thank You" to the line including the end character line "receipt". Although illustration is omitted herein, it is also possible to define the start character string and the end character string by use of the same character string so as to print the background image only on the line which includes that character string.

As described above, the print region can be specified by designating the start character string and the end character string. Accordingly, it is possible to avoid starting positions of the background image from shifting depending on receipts, whereby avoiding the deterioration in the appearance of the receipts particularly when a large-size pattern is applied to the background image. Moreover, as shown in the "Print Example 1" to the "Print Example 3", the start character string and the end character string are defined as the character strings which are always printed on every receipt. In this way, it is always possible to issue the receipt with the background image printed in an appropriate region regardless of the receipt length thereof.

As described above, according to the printing method of the present invention, the background images, the start character strings and the end character strings are stored in pluralities. Therefore, the operator (the user) can easily set the background image only by selecting desired items therefrom. In addition, by combination of the selected items, it is possible to print the background image in a variety of aspects even if the background image data registers only several types of the background images.

In particular, when the printer 50 of the present invention is applied to the POS system 10 as described in this embodiment, by storing a logo of a shop as the background image, it is possible to issue the receipt 61 with the logo of the shop which is printed in a specified region thereof. That is to say, if the printer 50 used as a receipt printer is provided with just a small memory sufficient for storing the background image (the logo), it is possible to produce a receipt with high visibility and to enhance an advertising effect by providing strong impression of the shop to customers.

Moreover, since the background image-added print data are generated by the control unit 140 inside the printer 50, it is possible to generate color-graphic-based print data (the background image-added print data) without changing the POS application execution unit 41a of the PC 40 even if the POS application execution unit 41a is monochrome-text-based, for example.

Next, a second embodiment of the present invention will be described. In the previous embodiment, the background image-added print data are generated by the control unit 140 inside the printer 50. However, in this embodiment, generation of the background image-added print data is achieved by a printer driver 452 which is installed in the PC 40. In the following, description will be made while focusing on differences from the first embodiment.

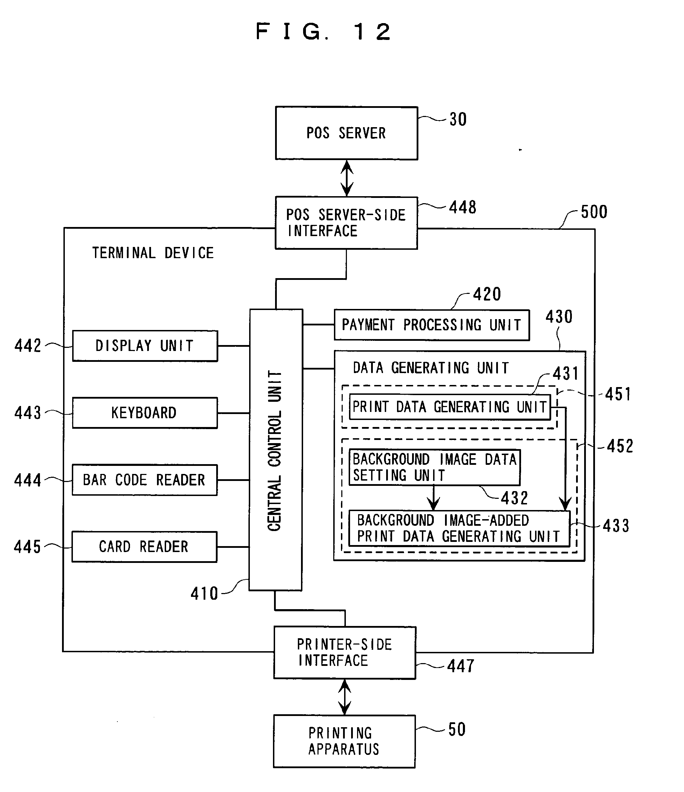

As shown in Fig. 12, a terminal device 500 of this embodiment includes: a display unit 442 for displaying a name of purchased merchandise and a price thereof upon payment transaction processing, and for displaying a setting screen upon background image data setting; a keyboard 443 for inputting a merchandise code and the price, and for inputting information used for the background image data setting; a bar code reader 444 for reading a bar code either attached to or printed on the merchandise in the event of the payment transaction processing; a card reader 445 for reading a credit card or a membership card owned by the customer 60 also in the event of the payment transaction processing; a POS server-side interface 448 for performing information input/output to and from the POS server 30; a printer-side interface 447 for performing information input/output to and from the printer 50; a payment transaction processing unit 420 for executing the payment transaction processing such as merchandise registration or settlement; a data generating unit 430 mainly for generating the print data; and a central control unit 410 for controlling the entire terminal device 500, the central control unit 410 including a CPU and memories such as a RAM and ROM.

The data generating unit 430 includes: a "print data generating unit 431" for generating the print data based on the information processed by the payment transaction processing unit 420 and the information transmitted from the POS server 30; a "background image data setting unit 432" for performing various setting of the background image data; and "a background image-added print data generating unit 433" for generating the background image-added print data by adding the background image data to the print data generated by the "print data generating unit 431" in accordance with the setting contents of the "background image data setting unit 432". Among those units, the "print data generating unit 431" is realized by a POS application execution unit 451, and the "background image data setting unit 432" and the "background image-added print data generating unit 433" are realized by a printer driver 452. Moreover, the "background image data setting unit 432" also includes a setting program (which corresponds to the background image data setting program 108 in the first embodiment; see Fig. 1) for setting the background image data.

The printer driver 452 is capable of transmitting the print data (the background image-added print data) through the printer-side interface 447 and receiving a control signal from the printer 50. The "background image data setting unit 432" and the "background image-added print data generating unit 433" in the printer driver 452 performs the processing which is similar to the processing executed by the control unit 140 in the printer 50 of the above-described first embodiment, therefore, description thereof will be omitted.

As described above, according to the second embodiment of the present invention, it is possible to generate color-graphic-based print data (the background image-added print data) by use of the printer driver 452 without changing the POS application execution unit 451 of the terminal device 500 even if the POS application execution unit 451 is monochrome-text-based, for example.

Note that generation of the background image-added print data is achieved by the control unit 140 inside the printer 50 in the first embodiment or by the printer driver 452 installed in the terminal device 500 in the second embodiment. Alternatively, it is possible to store these kinds of functions in a recording medium so that other printers can utilize a generation program. The recording medium usable herein includes a hard disk, a flash ROM, a memory card (such as Compact Flash (trademark), Smart Media (trademark) or Memory Stick (trademark)), a compact disk, a magneto optical disk, a digital versatile disk, a flexible disk and the like.

As described above, according to the printing method, and the program, the recording medium, the printer, the printer driver, the merchandise sales data processing apparatus and the POS system for realizing the printing method of the present invention, the background image data representing the background image are stored in the printer 50 in advance, and the background image and the receipt print information generated by the PC 40 are printed on the receipt so as to overlap each other when the print data representing the receipt print information is obtained. Accordingly, it is possible to issue a color-graphic-based receipt by use of the printer 50 without changing the application program even if the PC 40 adopts the monochrome-text-based application program, for example.

Moreover, the print region for the background image is defined as the region between the lines including the start character string and the end character string which are detected from the print data. In this way, it is possible to specify the print region easily and to produce a gook-looking receipt.

Furthermore, according to the arrangement described above, the background image-added print data are generated on the printer 50 side. Therefore, even if a low-speed interface is used as the interface between the PC 40 and the printer 50, data transfer time from the PC 40 to the printer 50 does not constitute a problem. In addition, since the printer driver does not have to be changed, it is possible to achieve issuance of the color-graphic-based receipt 61 with the minimum investment.

The setting command for setting the background image-added print data is generated by the printer driver 109 or 452. Accordingly, it is possible to perform the background image data setting from the PC 40 without changing the application program or directly operating the printer 50 even if the PC 40 or the terminal device 500 adopts the monochrome-text-based application program.

Alternatively, when the background image-added print data are generated by use of the printer driver 452 installed in the terminal device 500 (the second embodiment), it is also possible to issue the color-graphic-based receipt by use of the printer 50 without modifying the monochrome-text-based POS application execution unit 451 in the terminal device 500.

In the above-described embodiments, the print color for the receipt print information is preset to the primary color of "K (black)", while the print color for the background image can be selected from other print colors (the secondary colors) except "K (black)". Here, it is also possible to set "K (black)" as the print color for the background image. However, in this case (when the print colors for the print data and the background image are set to the same color), it is preferable that the brightness for printing the background image is set automatically lower. According to the arrangement described above, it is possible to add the background image without making it difficult to read the receipt print information.

Moreover, in addition to the background image, the print color of the receipt print information may be configured as selectable. However, in this case as well, it is preferable that the print color for the background image is set only to the color which is different from the color selected for printing the receipt print information. Alternatively, when the print color for the receipt print information and the print color for the background information are set to the same color, it is preferable that the brightness for printing the background image is set automatically lower.

Description has been made in the above embodiments based on the assumption that both of the start character string and the end character string are preset. However, even if any of these character strings is not preset, it is possible to specify the print region for the background image in accordance with a default value. For example, when the start character string is not designated, it is possible to start printing the background image from the line located in a certain length "X" away from a top end of the receipt 61. Similarly, when the end character string is not designated, it is possible to end printing the background image at the line located in a certain length "Y" away from a bottom end of the receipt 61. Alternatively, when the start character string is not designated, it is possible to start printing of the background image from the line where there is a certain printed character string (such as "Phone :") being included in the print data. When the end character string is not designated, it is possible to end printing of the background image at the line where there is another certain printed character string (such as "Thank you very much for shopping with us") being included in the print data. According to the arrangements described above, it is possible to save labor for setting when the user does not care about the print region.

Moreover, the contents of setting the background image data are not limited to the items illustrated in Fig. 6 and Fig. 7. It is also possible to provide facilities for setting scaling up/down or a rotation angle of the background image, designation of two or more background images and setting of the print colors for those background images. According to the arrangement described above, it is possible to generate more diversified background image data.

Furthermore, an inkjet printer is applied to the printer 50 in the above-described embodiments. However, it is also possible to apply a thermal head printer or a wire dot printer instead.

In addition, the present invention is not always limited to the above-described case using the POS system. Various modifications are possible within the scope of the present invention in terms of the system arrangement or device arrangement. Accordingly, the present invention is also applicable to a stand-alone electronic cash register (ECR) without connection with a server, for example.

As described above, the printing method, and the program for realizing the printing method, the recording medium, the printer, the printer driver, the merchandise sales data processing apparatus, and the POS system of the present invention exert an effect in that the color-graphic-based receipt can be issued by the printer without changing the monochrome-text-based application program in the host computer.

## Claims

1. A method of printing payment transaction information on a printing medium together with an image, comprising:
a first step of storing image data representing an image to be printed on the printing medium;
a second step of obtaining payment transaction data based on input payment transaction information;
a third step of detecting a character string indicating a position to start the addition of the image data or a position to end the addition of the image data out of the payment transaction data obtained in the second step; and
a fourth step of printing, on the printing medium, the image and the payment transaction data, said image being printed within a region of which at least one position is defined by the character string by synthesizing the image data with the data of payment transaction information.

2. A method of printing receipt print data on a receipt by using a printing apparatus, said receipt print data being prepared by obtaining payment transaction print data generated by an application execution unit on a host computer based on input information concerning merchandise sales, and then by superposing the payment transaction print data on background image data, the method comprising:
a background image data storing step for storing the background image data which represent the background image;
a print data obtaining step for obtaining the print data from the application execution unit;
a character string detecting step for detecting a start character string indicating a position to start addition of the background image data and an end character string indicating a position to end addition of the background image data out of the payment transaction print data; and
a printing step for printing the background image on the receipt within a region defined by the start character string and the end character string so that the background image is superposed on the printed payment transaction information.

3. The method according to claim 1, further comprising a fifth step of designating at least one of the start character string and the end character string.

4. The method according to claim 3, wherein the fourth step enables color printing by use of a primary color and at least one secondary color other than the primary color, and wherein the data for printing is printed in the primary color and the background image is printed in said at least one secondary color.

5. The method according to claim 4, wherein a character string is designated in the fifth step in accordance with a setting command transmitted from a host computer.

6. The method according to claim 5, wherein the setting command includes a parameter for designating a print color for the background image.

7. The method according to claim 5, wherein a plurality of files of background image data are stored in the first step, and wherein the setting command includes a parameter for selecting at least one of files of the background image data as an object for printing from the plurality of the background image data.

8. The method according to claim 5, wherein the setting command is generated by a printer driver which is incorporated in the host computer.

9. A program for causing a computer to realize the method of printing according to claim 1.

10. A computer-readable recording medium having recorded therein the program according to claim 9.

11. An apparatus for printing data for printing on a printing medium together with an image, comprising:
first means for storing background image data representing a background image to be printed on the printing medium;
second means for obtaining data payment transaction based on input information;
third means for detecting a start character string indicating a position to start addition of the background image data and an end character string indicating a position to end addition of the background image data out of the data for printing obtained in the second means; and
fourth means for printing, on the printing medium, the background image and the data for printing, said background image being printed within a region defined by the start character string and the end character string in a manner to overlap the data for printing.

12. An apparatus for printing, on a receipt, printing data prepared by obtaining payment transaction data generated by a host computer based on input information concerning merchandise sales, the payment transaction print data being printed so that the image is superposed on the payment transaction information, the printing apparatus comprising:
image data storing means for storing the image data which represents an image;
character string storing means for storing a character string indicating a position to start addition of the background image data or a position to end addition of the background image data;
print data obtaining means for obtaining the payment transaction print data from the host computer;
character string detecting means for detecting a predetermined character string out of the payment transaction print data; and
printing means for printing the image on the receipt in a region of which at least one end is designated by the character string, thereby printing the image by superposing it on the payment transaction print information.

13. The apparatus according to claim 11, further comprising fifth means for designating at least one of the start character string and the end character string.

14. The apparatus according to claim 13, wherein the fourth means enables color printing by use of a primary color and at least one secondary color other than the primary color, and wherein the payment transaction print data is printed in the primary color and the image is printed in at least said one secondary color.

15. The apparatus according to claim 14, wherein the fifth means stores a given character string into sixth means for storing character strings in accordance with a setting command transmitted from a host computer, and the image is of a background image.

16. The apparatus according to claim 15, wherein the setting command includes a parameter for designating a print color for the background image, and wherein the background image is printed in the designated print color in accordance with the parameter.

17. The apparatus according to claim 15, wherein the first means stores a plurality of files of the background image data, wherein the setting command includes a parameter for selecting a piece of the background image data as an object for printing from the plurality of the background image data, and wherein the background image selected in accordance with the parameter is printed.

18. The apparatus according to claim 15, wherein the setting command is generated by a printer driver which is incorporated in the host computer.

19. A printer driver incorporated in a host computer, said printer driver generating background image-added print data by adding image data representing an image to payment transaction print data generated by an application execution unit in the host computer based on input information concerning merchandise sales, and transmitting the background image-added print data to a printer, said printer driver comprising:
image data storing means for storing files of the image data which represent the background image;
print data obtaining means for obtaining the payment transaction print data from the application execution unit;
character string detecting means for detecting a start character string indicating a position to start addition of the image data or a position to end addition of the image data out of the payment transaction print data;
background image-added print data generating means for generating the image-added print data by synthesizing the image data with the payment transaction print data such that the image is printed within a region of which at least one edge is defined by the character string; and
transmitting means for transmitting the background image-added print data to the printer.

20. A merchandise sales data processing apparatus comprising the means for printing and a host computer according to claim 11.

21. A merchandise sales data processing apparatus comprising the printer driver, a terminal device functioning as the host computer, and the printer, according to claim 19.

22. A POS system comprising:
the merchandise sales data processing apparatus according to claim 20; and
a POS server for managing the merchandise sales data processing apparatus, the POS server being connected with the merchandise sales data processing apparatus via a network.

23. A POS system that prints payment transaction information with an image comprising:
a controller that fetches payment transaction print data generated based on input merchandise sales data;
a memory that stores image data representing an image;
a detector that detects a predetermined character or character string for indicating a position of an edge of the image to be printed;
a printing controller that prints the payment transaction print data and the image data on a printing medium by superposing the image on the payment transaction information in a region of which at least one edge is defined by the character or character string.
